# EUROPEAN PATENT SPECIFICATION

(11) **EP 0 782 960 B1**
(45) Date of publication and mention of the grant of the patent: **24.02.1999**
(21) Application number: 96300080.7
(22) Date of filing: 04.01.1996
(51) Int. Cl.: B65D 63/10, F16L 3/233

(54) **Cable tie having enhanced locking engagement between teeth on abutment wall and ratchet teeth on tongue**
Kabelbinder mit verbesserter Verriegelung zwischen Zähnen auf der Stützwand und Zähnen auf der Zunge
Serre-câble à verrouillage amélioré entre les dents sur la paroi de butée et les dents sur la languette

(43) Date of publication of application: 09.07.1997
(73) Proprietor: GB Electrical, Inc., Milwaukee, Wisconsin 53209 (US)
(72) Inventor: Sorensen, Soren Christian, Grand Cayman, Cayman Islands (KY); Sorensen, Jens Ole, Grand Cayman, Cayman Islands (KY)
(74) Representative: Wilson, Nicholas Martin

(56) References cited:
- FR-A- 2 075 766
- FR-A- 2 302 435
- GB-A- 1 016 674
- US-A- 3 735 448
- US-A- 4 473 524

## Description

### BACKGROUND OF THE INVENTION

The present invention pertains to a tie that is useful for forming a loop for retaining a bundle of elongated articles, such as cables. Such a tie is commonly known as a cable tie

One type of tie includes an elongated tongue with two ends and two broad sides, a locking head at one end of the tongue, a tip at the other end of the tongue, a first set of ratchet teeth extending along one broad side of the tongue and a second set of ratchet teeth extending along the other broad side of the tongue, wherein the locking head has sides defining an opening for receiving the tip of the tongue, the sides including a movable pawl that is hinged at one side of the opening and an abutment surface that is across the opening from the pawl, wherein the pawl has at least one pawl tooth disposed for engaging the first set of ratchet teeth when the tip of the tongue has been inserted through the opening with the first set of ratchet teeth facing the pawl, wherein the pawl, when the at least one pawl tooth is so engaged, is movable toward the abutment surface in response to pressure applied to the tongue in a direction opposite to the direction of insertion in order to force the second set of ratchet teeth against the abutment surface; and wherein at least one tooth is disposed on the abutment surface tor engaging the second set of ratchet teeth when the tip of the tongue has been inserted through the opening with the second set of ratchet teeth facing the abutment surface and the side of the tongue including the second set of ratchet teeth is forced against the abutment surface by movement of the pawl. Such a tie is described in U.S. Patent No 4,473,524 to Paradis.

### SUMMARY OF THE INVENTION

The present invention provides enhanced locking engagement between the at least one tooth on the abutment surface and the second set of ratchet teeth on the tongue.

According to one aspect of the present invention as disclosed in claim 1, the tie comprises an elongated tongue with two ends and two broad sides, a locking head at one end of the tongue, a tip at the other end of the tongue, a first set of ratchet teeth extending along one broad side of the tongue and a second set of ratchet teeth extending along the other broad side of the tongue, wherein the locking head has sides defining an opening for receiving the tip of the tongue, the sides including a movable pawl that is hinged at one side of said opening and an abutment surface that is across the opening from the pawl, wherein the pawl has at least one pawl tooth disposed for locking engagement with the set of first ratchet teeth when the tip of the tongue has been inserted through said opening with the first get of ratchet teeth facing the pawl, wherein the pawl, when the at least one pawl tooth is so engaged, is movable toward the abutment surface in response to a pulling force applied to the tongue in a direction opposite to the direction of said insertion in order to force the second set of ratchet teeth against the abutment surface; wherein the abutment surface includes at least one tooth having a locking surface extending toward an apex of the tooth at an angle inclined toward said direction of insertion for locking engagement with the second set of ratchet teeth when the tongue has been inserted through the opening with the second set of ratchet teeth facing the abutment surface and the side of the tongue including the second set of ratchet teeth is forced against the abutment surface by movement of the pawl.

According to another aspect of the present invention as disclosed in claim 2, the tie comprises an elongated tongue with two ends and two broad sides, a locking head at one end of the tongue, a tip at the other end of the tongue, a first set of ratchet teeth extending along one broad side of the tongue and a second set of ratchet teeth extending along the other broad side of the tongue, wherein the locking head has sides defining an opening for receiving the tip of the tongue, the sides including a movable pawl that is hinged at one side of said opening and an abutment surface that is across the opening from the pawl, wherein the pawl has at least one pawl tooth disposed for locking engagement with the set of first ratchet teeth when the tip of the tongue has been inserted through said opening with the first set of ratchet teeth facing the pawl, wherein the pawl, when the at least one pawl tooth is so engaged, is movable toward the abutment surface in response to a pulling force applied to the tongue in a direction opposite to the direction of said insertion in order to force the second set of ratchet teeth against the abutment surface; wherein the abutment surface includes at least one tooth having a locking surface extending toward an apex of the tooth for locking engagement with the second set of ratchet teeth when the tongue has been inserted through the opening with the second set of ratchet teeth facing the abutment surface and the side of the tongue including the second set of ratchet teeth is forced against the abutment surface by movement of the pawl, and wherein at least one tooth of the second set of ratchet teeth has a locking surface extending toward an apex of said tooth at an angle inclined away from said direction of insertion for locking engagement with the at least one tooth of the abutment surface when the tongue has been inserted through the opening with the second set of ratchet teeth facing the abutment surface and the side of the tongue including the second set of ratchet teeth is forced against the abutment surface by movement of the pawl.

Both of the above aspects of the present invention are combined in the preferred embodiment, as disclosed in claim 3.

Further preferred embodiments are disclosed in claims 4 and 5.

Additional features of the present invention are described with reference to the detailed description of the preferred embodiments.

### BRIEF DESCRIPTION OF THE DRAWING

FIG. 1 is a fragmentary sectional view of one preferred embodiment of a tie according to the present invention.
FIG. 2 is an enlarged sectional view illustrating the engagement of the ratchet teeth on the tongue with the abutment surface teeth and the pawl teeth within the locking head of the tie shown in FIG. 1.
FIG. 3 is an enlarged sectional view illustrating the engagement of the ratchet teeth on the tongue with the abutment surface teeth and the pawl teeth within the locking head of an alternative embodiment of a tie according to the present invention.

### DETAILED DESCRIPTION

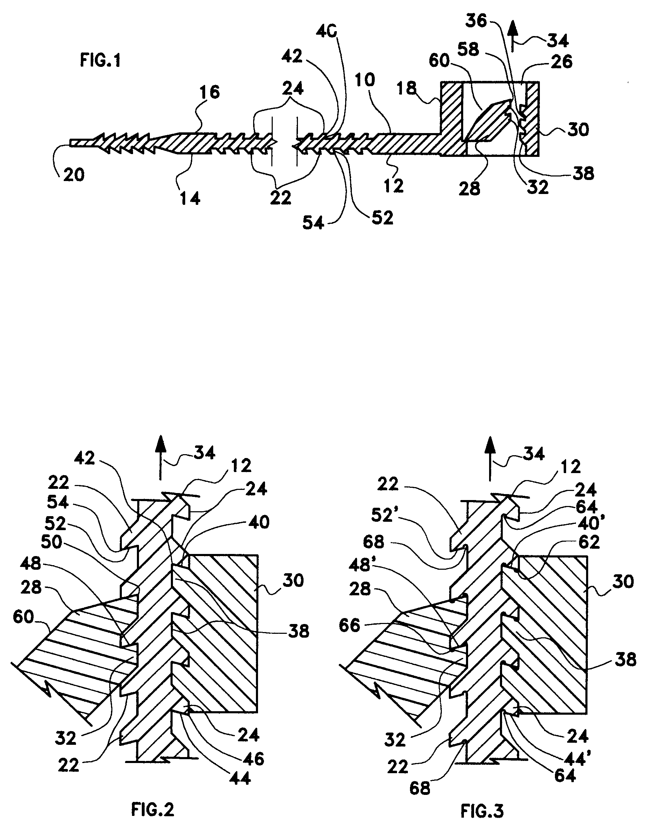

Referring to FIGS. 1 and 2, a preferred embodiment of the tie 10 of the present invention includes an elongated tongue 12 with two ends and two broad sides 14, 16, a locking head 18 at one end of the tongue, a tip 20 at the other end of the tongue 12, a first set of ratchet teeth 22 extending along one broad side 14 of the tongue 12 and a second set of ratchet teeth 24 extending along the other broad side 16 of the tongue 12. The locking head 18 has sides defining an opening 26 for receiving the tip 20 of the tongue 12. The sides include a movable pawl 28 that is hinged at one side of the opening 26 and an abutment wall 30 that is across the opening 26 from the pawl 28. The pawl 28 has pawl teeth 32 disposed for locking engagement with the set of ratchet teeth 22 when the tip 20 of the tongue 12 has been inserted through the opening 26 with the ratchet teeth 22 facing the pawl 28. When at least one pawl tooth 32 is so engaged, the pawl 28 is movable toward the abutment wall 30 in response to a pulling force applied to the tongue 12 in a direction opposite to the direction of insertion 34 in order to force the tongue 12 against an abutment surface 36 of the abutment wall 30. Teeth 38 are disposed on the abutment surface 36 for engaging the second set of ratchet teeth 24 when the tip 20 of the tongue 12 has been inserted through the opening 26 with the second set of ratchet teeth 24 facing the abutment surface 36 and the side 16 of the tongue 12 including the second set of ratchet teeth 24 is forced against the abutment surface 36 by movement of the pawl 28 in response to a pulling force applied to the tongue 12 in a direction opposite to the direction of insertion 34.

Each of the abutment surface teeth 38 has a locking surface 40 extending toward an apex 42 of the tooth 38 at an angle inclined toward the direction of insertion 34 for locking engagement with a tooth of the second set of ratchet teeth 24 when the tongue 12 has been inserted through the opening 26 with the second set of ratchet teeth 34 facing the abutment surface 36 and the side 16 of the tongue 12 including the second set of ratchet teeth 24 is forced against the abutment surface 36 by movement of the pawl 28 in response to a pulling force applied to the tongue 12 in a direction opposite to the direction of insertion 34.

Each of the second set of ratchet teeth 24 has a locking surface 44 extending toward an apex 46 of the tooth 24 at an angle inclined away from the direction of insertion for locking engagement with a tooth 38 of the abutment surface 36 when the tongue 12 has been inserted through the opening 26 with the second set of ratchet teeth 24 facing the abutment surface 36 and the side 16 of the tongue 12 including the second set of ratchet teeth 24 is forced against the abutment surface 36 by movement of the pawl 28. The angle of inclination of the locking surface 40 of each tooth 38 on the abutment surface 36 is the same as the angle of inclination of the locking surface 44 of each of the second set of ratchet teeth 24.

Each pawl tooth 32 has a locking surface 48 extending toward an apex 50 of the tooth 32 at an angle inclined toward the direction of insertion 34 for locking engagement with a tooth of the first set of ratchet teeth 22 when the tongue 12 has been inserted through the opening 26 with the first set of ratchet teeth 22 facing the pawl 28. The angle of inclination of the locking surface 48 of the pawl tooth is defined as the angle of inclination of the locking surface 48 with respect to the direction of insertion 34 when the pawl teeth 32 are in locking engagement with the set of ratchet teeth 22 and the pawl 28 has moved to force the tongue 12 against the abutment surface 36

Each of the first set of ratchet teeth 22 has a locking surface 52 extending toward an apex 54 of the tooth 22 at an angle inclined away from the direction of insertion 34 for locking engagement with a pawl tooth 32 when the tongue 12 has been inserted through the opening 26 with the set of ratchet teeth 22 facing the pawl 28. The angle of inclination of the locking surface 48 of each pawl tooth 32 is the same as the angle of inclination of the locking surface 52 of each of the first set of ratchet teeth 22.

The side 58 of the pawl 28 including the teeth 32 converges toward the opposite side 60 of the pawl 28 in the direction of insertion 34 to ease the removal of the tie from the mold when the tie 10 is made by injection molding. The abutment surface 36 also converges toward the opposite side 60 of the pawl 28 in the direction of insertion 34 to further ease the removal of the tie from the mold when the tie 10 is made by injection molding.

Preferably, ties 10 according to the present invention are made by injection molding plastic material into a mold defining cavities for forming the ties 10.

In an alternative preferred embodiment shown in FIG. 3, there are notches 62, 64, 66, 68 adjacent the respective locking surfaces 40', 44', 48', 52' of at least some of the abutment surface teeth 38, the second set of ratchet teeth 24, the pawl teeth 28 and/or the first set of ratchet teeth 22. Such locking surfaces 40', 44', 48', 52' do not extend into such notches 62, 64, 66, 68. A locking surface is only that portion a surface that contacts another surface for locking the tongue 12 in the locking head 18. Except for such notches 62, 64, 66, 68, the embodiment of FIG. 3 is the same as the embodiment of FIGS. 1 and 2.

In other alternative embodiments (not shown), (a) there is only one tooth on the abutment surface, with such tooth being inclined at an angle toward the direction of insertion for locking engagement with a tooth of the second set of ratchet teeth; (b) less than all of the second set of ratchet teeth are inclined at an angle away from the direction of insertion for locking engagement with a tooth on the abutment surface; (c) there is only one pawl tooth, with such tooth being inclined at an angle toward the direction of insertion for locking engagement with a tooth of the first set of ratchet teeth; and/or (d) less than all of the first set of ratchet teeth are inclined at an angle away from the direction of insertion for locking engagement with a pawl tooth.

The features of at least one pawl tooth being inclined at an angle toward the direction of insertion for locking engagement with a tooth of the first set of ratchet teeth; and at least one of the first set of ratchet teeth being inclined at an angle away from the direction of insertion for locking engagement with a pawl tooth in a tie in which the side of the pawl including the pawl teeth converges toward the opposite side of the pawl in the direction of insertion, are the subject of a separate patent application EP 0 782 961 A filed by applicants on even date herewith, entitled "Cable Tie Having Enhanced Locking Engagement Between Pawl Teeth And Ratchet Teeth On Tongue".

The advantages specifically stated herein do not necessarily apply to every conceivable embodiment of the present invention. Further, such stated advantages of the present invention are only examples and should not be construed as the only advantages of the present invention.

While the above description contains many specificities, these should not be construed as limitations on the scope of the present invention, but rather as exemplifications of the preferred embodiments described herein. Other variations are possible and the scope of the present invention should be determined not by the embodiments described herein but rather by the claims.

## Claims

1. A tie (10) comprising an elongated tongue (12) with two ends and two broad sides (14, 16), a locking head (18) at one end of the tongue, a tip (20) at the other end of the tongue, a first set of ratchet teeth (22) extending along one broad side of the tongue and a second set of ratchet teeth (24) extending along the other broad side of the tongue, wherein the locking head has sides defining an opening (26) for receiving the tip of the tongue, the sides including a movable pawl (28) that is hinged at one side of said opening and an abutment surface (36) that is across the opening from the pawl, wherein the pawl has at least one pawl tooth (32) disposed for locking engagement with the set of first ratchet teeth when the tip of the tongue has been inserted through said opening with the first set of ratchet teeth facing the pawl, wherein the pawl, when the at least one pawl tooth is so engaged, is movable toward the abutment surface in response to a pulling force applied to the tongue in a direction opposite to the direction of said insertion (34) in order to force the second set of ratchet teeth against the abutment surface; and wherein the abutment surface includes at least one tooth (38) having a locking surface (40) extending toward an apex (42) of the tooth (38) for locking engagement with the second set of ratchet teeth when the tongue has been inserted through the opening with the second set of ratchet teeth facing the abutment surface and the side of the tongue including the second set of ratchet teeth is forced against the abutment surface by movement of the pawl;
characterised in that the locking surface (40) of the at least one tooth (38) of the abutment surface extends toward the apex (42) of said at least one tooth (38) at an angle inclined toward said direction of insertion (34) for said locking engagement with the second set of ratchet teeth (24).

2. A tie (10) comprising a elongated tongue (12) with two ends and two broad sides (14, 16), a locking head (18) at one end of the tongue, a tip (20) at the other end of the tongue, a first set of ratchet teeth (22) extending along one broad side of the tongue ad a second set of ratchet teeth (24) extending along the other broad side of the tongue, wherein the locking head has sides defining an opening (26) for receiving the tip of the tongue, the sides including a movable pawl (28) that is hinged at one side of said opening and an abutment surface (36) that is across the opening from the pawl, wherein the pawl has at least one pawl tooth (32) disposed for locking engagement with the set of first ratchet teeth when the tip of the tongue has been inserted through said opening with the first set of ratchet teeth facing the pawl, wherein the pawl, when the at least one pawl tooth is so engaged, is movable toward the abutment surface in response to a pulling force applied to the tongue in a direction opposite to the direction of said insertion (34) in order to force the second set of ratchet teeth against the abutment surface; and wherein the abutment surface includes at least one tooth (38) having a locking surface (40) extending toward an apex (42) of the tooth for locking engagement with the second set of ratchet teeth when the tongue has been inserted through the opening with the second set of ratchet teeth facing the abutment surface and the side of the tongue including the second set of ratchet teeth is forced against the abutment surface by movement of the pawl; and
characterised in that at least one tooth (24) of the second set of ratchet teeth has a locking surface (44) extending toward an apex (46) of said at least one tooth (24) at an angle inclined away from said direction of insertion (34) for said locking engagement with the at least one tooth (38) of the abutment surface.

3. A tie according to Claim 2, characterised in that the locking surface (40) of the at least one tooth (38) of the abutment surface extends toward the apex (42) of said at least one tooth (38) at an angle inclined toward said direction of insertion (34) for said locking engagement with the second set of ratchet teeth (24).

4. A tie according to Claim 3, characterised in that the angle of inclination of the locking surface (40) of said at least one tooth (38) of the abutment surface is the same as the angle of inclination of the locking surface (44) of said at least one tooth (24) of the second set of ratchet teeth.

5. A tie according to Claim 3, characterised in that the angle of inclination of the locking surface (40) of each said at least one tooth (38) of the abutment surface is the same as the angle of inclination of the locking surface (44) of each said at least one tooth (24) of the second set of ratchet teeth.

## Patentansprüche

1. Binder
- mit einer langestreckten Zunge (12), welche zwei Enden und zwei breite Seiten (14,16), einen Arretierkopf (18) an einem Ende der Zunge, eine Spitze (20) am anderen Ende der Zunge, einen ersten Satz von Rastzähnen (22), die sich längs einer breiten Seite der Zunge erstrecken, und einen zweiten Satz von Rastzähnen (24) aufweist, die sich längs der anderen breiten Seite der Zunge erstrecken,
- wobei der Arretierkopf Seiten hat, die eine Öffnung (26) für die Aufnahme der Spitze der Zunge begrenzen und die Seiten ein an einer Seite der Öffnung angelenktes bewegliches Klinkelement (28) und eine Widerlagerfläche (36) einschließen, die sich auf der dem Klinkelement gegenüberliegenden Seite der Öffnung befindet,
- wobei das Klinkelement wenigstens einen Klinkzahn (32) hat, der für einen Arretiereingriff mit dem Satz von ersten Rastzähnen angeordnet ist, wenn die Spitze der Zunge durch die Öffnung eingeführt worden ist und der erste Satz von Rastzähnen dem Klinkelement zugewandt ist,
- wobei das Klinkelement, wenn der wenigstens eine Klinkzahn so in Eingriff steht, zu der Widerlagerfläche ansprechend auf eine Zugkraft bewegbar ist, die an die Zunge in einer Richtung angelegt wird, die zu der Einführrichtung (34) entgegengesetzt ist, um den zweiten Satz von Rastzähnen gegen die Widerlagerfläche zu drücken, und
- wobei die Widerlagerfläche wenigstens einen Zahn (38) mit einer sich zu einem Scheitel (42) des Zahns (38) erstreckenden Arretierfläche (40) für einen Arretiereingriff mit dem zweiten Satz von Rastzähnen hat, wenn die Zunge durch die Öffnung eingeführt worden ist und der zweite Satz von Rastzähnen der Widerlagerfläche zugewandt ist und die Seite der Zunge mit dem zweiten Satz von Rastzähnen gegen die Widerlagerfläche durch eine Bewegung des Klinkelements gedrückt wird,
dadurch gekennzeichnet,
- daß die Arretierfläche (40) des wenigstens einen Zahns (38) der Widerlagerfläche sich zu dem Scheitel (42) des wenigstens einen Zahns (38) mit einem Winkel erstreckt, der zu der Einführrichtung (34) für den Arretiereingriff mit dem zweiten Satz von Rastzähnen (24) geneigt ist.

2. Binder
- mit einer langestreckten Zunge (12), welche zwei Enden und zwei breite Seiten (14,16), einen Arretierkopf (18) an einem Ende der Zunge, eine Spitze (20) am anderen Ende der Zunge, einen ersten Satz von Rastzähnen (22), die sich längs einer breiten Seite der Zunge erstrecken, und einen zweiten Satz von Rastzähnen (24) aufweist, die sich längs der anderen breiten Seite der Zunge erstrecken,
- wobei der Arretierkopf Seiten hat, die eine Öffnung (26) für die Aufnahme der Spitze der Zunge begrenzen und die Seiten ein an einer Seite der Öffnung angelenktes bewegliches Klinkelement (28) und eine Widerlagerfläche (36) einschließen, die sich auf der dem Klinkelement gegenüberliegenden Seite der Öffnung befindet,
- wobei das Klinkelement wenigstens einen Klinkzahn (32) hat, der für einen Arretiereingriff mit dem Satz von ersten Rastzähnen angeordnet ist, wenn die Spitze der Zunge durch die Öffnung eingeführt worden ist und der erste Satz von Rastzähnen dem Klinkelement zugewandt ist,
- wobei das Klinkelement, wenn der wenigstens eine Klinkzahn so in Eingriff steht, zu der Widerlagerfläche ansprechend auf eine Zugkraft bewegbar ist, die an die Zunge in einer Richtung angelegt wird, die zu der Einführrichtung (34) entgegengesetzt ist, um den zweiten Satz von Rastzähnen gegen die Widerlagerfläche zu drücken, und
- wobei die Widerlagerfläche wenigstens einen Zahn (38) mit einer sich zu einem Scheitel (42) des Zahns erstreckenden Arretierfläche (40) für einen Arretiereingriff mit dem zweiten Satz von Rastzähnen hat, wenn die Zunge durch die Öffnung eingeführt worden ist und der zweite Satz von Rastzähnen der Widerlagerfläche zugewandt ist und die Seite der Zunge mit dem zweiten Satz von Rastzähnen gegen die Widerlagerfläche durch eine Bewegung des Klinkelements gedrückt wird,
dadurch gekennzeichnet,
- daß wenigstens ein Zahn (24) des zweiten Satzes von Rastzähnen eine Arretierfläche (44) hat, die sich zu einem Scheitel (46) des wenigstens einen Zahns (24) mit einem Winkel erstreckt, der von der Einführrichtung (34) für den Arretiereingriff mit dem wenigstens einen Zahn (38) der Widerlagerfläche weg geneigt ist.

3. Binder nach Anspruch 2, dadurch gekennzeichnet, daß die Arretierfläche (40) des wenigstens einen Zahns (38) der Widerlagerfläche sich zu dem Scheitel (42) des wenigstens einen Zahns (38) mit einem Winkel erstreckt, der zu der Einführrichtung (34) für den Arretiereingriff mit dem zweiten Satz von Rastzähnen (24) hin geneigt ist.

4. Binder nach Anspruch 3, dadurch gekennzeichnet, daß der Neigungswinkel der Arretierfläche (40) des wenigstens einen Zahns (38) der Widerlagerfläche der gleiche ist, wie der Neigungswinkel der Arretierfläche (44) des wenigstens einen Zahns (24) des zweiten Satzes von Rastzähnen.

5. Binder nach Anspruch 3, dadurch gekennzeichnet, daß der Neigungswinkel der Arretierfläche (40) eines wenigstens einen Zahns (38) der Widerlagerfläche der gleiche ist, wie der Neigungswinkel der Arretierfläche (44) eines wenigstens einen Zahns (24) des zweiten Satzes von Rastzähnen.

## Revendications

1. Serre-câble (10) comprenant une languette oblongue (12) avec deux extrémités et deux côtés larges (14, 16), une tête de verrouillage (18) sur une extrémité de la languette, une pointe (20) sur l'autre extrémité de la languette, une première série de dents à rochet (22) s'étendant sur un côté large de la languette et une seconde série de dents à rochet (24) s'étendant sur l'autre côté large de la languette, la tête de verrouillage comportant des côtés définissant une ouverture (26) pour recevoir la pointe de la languette, les côtés incorporant un cliquet mobile (28) qui est articulé sur un côté de l'ouverture, une surface de butée (36) qui se situe en travers de l'ouverture en partant du cliquet, le cliquet ayant au moins une dent à cliquet (32) disposée pour l'engagement de verrouillage avec la série des premières dents à rochet lorsque la pointe de la languette a été introduite par l'ouverture avec la première série de dents à rochet faisant face aux cliquets, serre-câble dans lequel le cliquet, lorsque au moins une dent de cliquet est ainsi engagée, peut se déplacer en direction de la surface de butée en réponse à une force de traction appliquée à la languette dans une direction opposée à la direction de l'introduction (34) pour forcer la seconde série de dents à rochet contre la surface de butée; et dans lequel la surface de butée comprend au moins une dent (38) avec une surface de blocage (40) s'étendant vers un sommet (42) de la dent (38) pour l'engagement de verrouillage avec la seconde série de dents à rochet lorsque la languette a été introduite par l'ouverture avec la seconde série de dents à rochet faisant face à la surface de butée et le côté de la languette incorporant la seconde série de dents à rochet est forcé contre la surface de butée par le mouvement du cliquet;
caractérisé en ce que la surface de blocage (40) d'au moins une dent (38) de la surface de butée s'étend en direction des sommets (42) d'au moins une dent (38) selon un angle incliné dans cette direction d'introduction (34) pour l'engagement de verrouillage avec la seconde série de dents de rochet (24).

2. Serre-câble (10) comprenant une languette oblongue (12) avec deux extrémités et deux côtés larges (14, 16), une tête de verrouillage (18) sur un côté de la languette, une pointe (20) de l'autre côté de la languette, une première série de dents à rochet (22) s'étendant sur un côté large de la languette et une seconde série de dents à rochet (24) s'étendant le long de l'autre côté large de la languette, dans lequel la tête de verrouillage comporte des côtés définissant une ouverture (26) pour recevoir la pointe de la languette, les côtés incorporant un cliquet mobile (28) qui est articulé sur un côté de l'ouverture et une surface de butée (36) qui se situe à travers l'ouverture en partant du cliquet, dans lequel le cliquet comporte au moins une dent de cliquet (32) disposée pour l'engagement de verrouillage avec la série de première dent de rochet lorsque la pointe de la languette a été introduite par l'ouverture avec la première série de dents de rochet faisant face au cliquet, dans lequel le cliquet, lorsque au moins une dent de cliquet est ainsi engagée, peut se déplacer vers la surface de butée en réponse à une force de traction appliquée sur la languette dans une direction opposée à la direction de l'introduction (34) pour forcer la seconde série de dents à rochet contre la surface de butée et dans lequel la surface de butée comprend au moins une dent (38) avec une surface de blocage (40) s'étendant vers un sommet (42) de la dent pour l'engagement de verrouillage avec la seconde série de dents à rochet lorsque la languette à été introduite par l'ouverture avec la seconde série de dent à rochet faisant face à la surface de butée et le côté de la languette incorporé à une seconde série de dents à rochet et forcée contre la surface de butée par le mouvement du cliquet et
caractérisé en ce qu'au moins une dent (24) de la seconde série de dents à rochet comporte une surface de blocage (44) s'étendant en direction d'un sommet (46) d'au moins une dent (24) selon un angle incliné en éloignement de la direction d'introduction (34) pour l'engagement de verrouillage avec au moins une dent (38) de la surface de butée.

3. Serre-câble selon la revendication 2, caractérisé en ce que la surface de blocage (40) d'au moins une dent (38) de la surface de butée s'étend en direction du sommet (42) d'au moins une dent (38) selon un angle incliné dans la direction d'introduction (34) pour l'engagement de verrouillage avec la seconde série de dents de rochet (24).

4. Serre-câble selon la revendication 3, caractérise en ce que l'angle d'inclinaison de la surface de blocage (40) d'au moins une dent (38) de la surface de butée est la même que l'angle d'inclinaison de la surface de blocage (44) d'au moins une dent (24) de la seconde série de dents de rochet.

5. Serre-câble selon la revendication 3, caractérisé en ce que l'angle d'inclinaison de la surface de blocage (40) d'au moins chaque dent (38) de la surface de butée est le même que l'angle d'inclinaison de la surface de blocage (44) d'au moins une dent (24) de la seconde série de dents de rochet.
